# EUROPEAN PATENT SPECIFICATION

(11) **EP 1 364 194 B1**
(45) Date of publication and mention of the grant of the patent: **25.07.2007**
(21) Application number: 02717535.5
(22) Date of filing: 01.03.2002
(51) Int. Cl.: G01M 3/26, G01M 3/20, G01M 3/00, F04B 51/00, G08B 21/00, F04B 1/04, F04B 43/00, F04B 49/06

(54) **METHODS AND APPARATUS FOR DETERMINING THE PRESENCE OR ABSENCE OF A FLUID LEAK**
VERFAHREN UND VORRICHTUNG ZUR BESTIMMUNG DER ANWESENHEIT ODER ABWESENHEIT EINES FLÜSSIGKEITSLECKS
PROCEDES ET APPAREIL SERVANT A DETERMINER LA PRESENCE OU L'ABSENCE D'UNE FUITE DE FLUIDES

(30) Priority: 02.03.2001 US 272934 P
(43) Date of publication of application: 26.11.2003
(73) Proprietor: Waters Investments Limited, Milford, MA 01757 (US)
(72) Inventor: LUONGO, Joseph, A., Walpole, MA 02081 (US); CIAVARINI, Steven, J., Bellingham, MA 02019 (US); TACCONI, Robert, Q., Medfield, MA 02052 (US); RUBINO, Frank, A., Milford, MA 01757 (US); DUMAS, Robert, J., Upton, MA 01568 (US)
(74) Representative: Vossius, Corinna
(86) International application number: PCT/US2002/006540
(87) International publication number: WO 2002/086437

(56) References cited:
- NL-C- 1 006 954
- US-A- 3 100 986
- US-A- 4 715 214
- US-A- 4 901 751
- US-A- 4 927 411
- US-A- 5 336 053
- US-A- 5 383 351
- US-A- 5 439 355
- US-A- 5 631 632
- US-A- 5 770 794
- US-A- 5 817 925
- US-A- 6 055 851
- US-A- 6 094 970

## Description

### FIELD OF THE INVENTION

This invention relates to analytical and diagnostic instruments in which a pump induces a flow of fluid. Embodiments of the present method and apparatus determine the presence or absence of a leak by placing a fluid under pressure by operating a pump and measuring the pressure in a conduit over time. The decay of the pressure over time is compared to a predetermined rate of decay. A rate of decay greater than the threshold value suggests a leak in the hydraulic components under pressure including conduits, fittings, seals, valves or pump components. The measurement of decay over time can be compared to the threshold value or dynamic threshold values as the instrument is operated. Embodiments of the present invention have special application with respect to multi-chambered pumps. Each pump chamber can be used to place a fluid under pressure with different conduits, valves and seals.

### BACKGROUND OF THE INVENTION

By way of background, the following terms will be used in this application with the meaning ascribed thereto.

The term "component defect" is used to mean that the apparatus can not attain or maintain a normal set point. In the context of a pump, a common component defect is often a leak but also encompasses the failure of sensing devices such as transducers or computing devices. As used herein, the term "leak" refers to a hole, crack or opening through which fluid escapes in a manner not intended by the user. The leak may be totally internal. That is, the fluid escapes from an area of high pressure to an area of low pressure within the apparatus. Or, such leak may be external, allowing fluid to escape from the confines of the hydraulic circuit. Leaking flammable fluids represent a safety concern, the detection of which would be very useful.

The term "solution failure" is used to suggest an absence of fluid, gases in solution or a partial filling of the pump assembly with fluid.

A "pump" is a mechanical device for moving fluids. Embodiments of the present invention have particular application to high pressure pumps used in analysis and diagnostics. By way of example, without limitation, pumps used in high performance liquid chromatography are capable of placing a fluid under as much as 10,000 psi (63,000 KPa). Such pumps can be single chamber pumps or multi-chambered pumps. One common multi-chambered pump is a serial pump in which a plurality of, usually two, pumping chambers are placed in series. That is, the flow of fluid first passes through a first pump chamber and then a second pump chamber. Another common multi-chambered pump is a parallel pump in which a plurality of, usually two, pumping chambers are placed in parallel. That is, fluid is received by a first chamber, which chamber brings the fluid to pressure and propels such fluid downstream without involving a further pump chamber. As the first pump chamber is exhausted, a second pump chamber starts to propel fluid. Parallel pumps are often equipped with rotary valves which control the outflow of the plurality of pump chambers.

As used herein, the term "control means" means control circuitry and /or computer programmable unit (CPU).

As used herein, "pressure measuring device" comprise any device for measuring pressure, including strain gauges and pressure transducers.

Valves are devices for closing, opening or directing fluid flow. Typical valves include such mechanical check valves and active valves. Mechanical check valves are responsive to pressure. Active valves receive a signal which directs power means, such as motors, solenoids and the like, to open or close the valve. Cycling valves are capable of selectively opening and closing the flow of fluid from one or more sources or directing the flow to one or more destinations. Cycling valves are used in parallel pumps to alternate the outlet flow from multiple pump chambers.

Current techniques require manual intervention to determine the integrity of a hydraulic system. It would be advantageous to have methods and apparatus capable performing operations which determine the presence or absence of a leak in a hydraulic system under pressure. Such methods and apparatus would be able to ascertain a problem in a system and alert the operator, or shut the operation down until the problem can be remedied.

US 5,336,053 discloses a method of testing a pumping system. A pump cassette effects pressurization of the system with subsequent monitoring of any pressure loss in the system. Pressure measurements are taken before and after a specified time interval with any significant pressure loss indicating system leakage. Furthermore, a disposable fluid infusion pumping chamber cassette adapted for leak detection monitoring is disclosed in US 4,927,411.

The above prior art documents describe single chamber pumps used to prepare intravenous bags for medical applications. Consequently, these conventional pumps operate at much lower pressures than chromatographic pumps and are not suited for providing a continuous constant flow of pressurized fluid for chromatographic operations.

### SUMMARY OF THE INVENTION

Embodiments of the present invention feature methods and apparatus which facilitate the detection of leaks, solution failures and poor performance of various components of a pump. One embodiment of the present invention is a pumping apparatus for pumping fluid according to claim 1.

A further embodiment of the present invention features a method of testing the performance of a pumping apparatus for pumping fluid. The method comprising the steps of providing a pumping apparatus having at least two pumping chambers having an inlet and an outlet.

Further features and advantages of the present invention will be apparent upon reading the detailed description which follows and viewing the drawings that are described in summary form below.

### Brief Description of the Drawings

Figure 1 depicts a single chamber pump apparatus not covered by the present invention;
Figure 2 depicts a dual chamber series pump apparatus embodying features of the present invention;
Figure 3 depicts a dual chamber parallel pump apparatus not covered by the present invention; and,
Figure 4 graphically depicts a pressure plot from a pressure measuring device over time and threshold value.

### DETAILED DESCRIPTION

Embodiments of the present invention feature methods and apparatus which facilitate the detection of leaks and poor performance of various components of a pump. One embodiment of the present invention is a pumping apparatus for pumping fluid. However, embodiments of the present invention have applications in all fluid application in which information regarding the integrity of seals and fittings and the like is desirable. Thus, the present detailed description should be construed as an exemplification of the invention and not limiting the invention to the details provided.

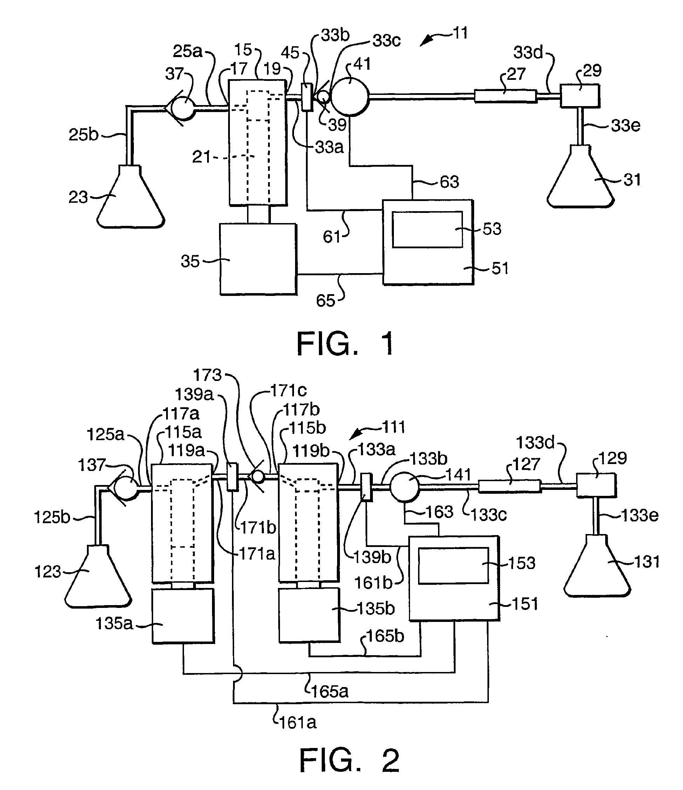

Turning now to Figure 1, a pumping apparatus, (not covered by the present invention) generally designated by the numeral 11, is illustrated. Pumping apparatus is of the type normally associated with chromatographic applications. The pumping apparatus 11 has one pumping chamber 15 having an inlet 17 and an outlet 19. The pumping chamber 15 has a piston 21 for movement in the chamber 15. Piston 21 propels the fluid from the chamber. The inlet 17 is for receiving fluid from a fluid supply 23 through conduits 25a and 25b. The outlet 19 is for discharging the fluid from the chamber to a downstream chromatographic column 27, a detector 29 and a waste receptacle 31 via conduits 33a, 33b, 33c, 33d and 33e.

A motor 35 powers the piston 21 in the pumping chamber 15 through any number of mechanical devices, such as cams or spindle drives [not shown] known in the art. The motor 35 operates in pumping mode upon receiving a pumping signal.

Inlet valve 37 is in fluid communication with the inlet 17 of the pumping chamber 15 by a suitable conduit 25a or by incorporation into the pump head [not shown]. The inlet valve 37 has an open position and a closed position. Preferably, the apparatus 11 further comprises a check valve 39 in fluid communication with the pump chamber 15 downstream of the pump chamber 15. Inlet valve 37 and check valve 39 may be of standard design and features and are available from a number of vendors.

A switchable valve 41 is in fluid communication with the outlet 19 of the pumping chamber 15. The switchable valve 41 has a closed position and an open position. The switchable valve 41 assumes a closed position upon receiving a close signal. Switchable valve 41 may be solenoid controlled or a powered rotating valve. A suitable valve is a multi-position valve sold by Valco Instruments Co. Inc. (Houston, Texas USA).

A pressure measuring device 45 is in fluid communication with the pumping chamber 15, between the inlet valve 37 and switchable valve 41. The pressure measuring device 45 is, preferably, a pressure transducer which produces a pressure signal in response to pressure. A suitable pressure transducer is a tranducer sold by DJ Instruments (Billerica, Massachusetts USA)

The apparatus 11 further comprises control means 51 for receiving the pressure signal via line 61, for sending a close signal to the switchable valve 41 via line 63 and for sending a pumping signal to the motor 35 via line 65. The control means 51 is preferably a computer equipped with an operator interface such as monitor or display 53. Suitable computers are available from numerous vendors and include such personal computers having an IBM format or Apple operating system.

The apparatus 11 has a test mode in which the control means 51 sends a pumping signal to the motor 35, sends a close signal to the switchable valve 41 to cause the fluid in the pump chamber 15 to be placed under a pressure. The pressure measuring device 45 determines at least one minimal pressure and sends a minimal pressure signal to the control means 51. Preferably, the control means 51 compares the minimal pressure with a minimal acceptable value. The minimal acceptable value represents a value which is related to acceptable pump performance. Failure to attain such minimal acceptable value suggests a defect in the pump. For a chromatographic pump, such minimal acceptable value may be set at a value from 50 psig to 5000 psig (345 - 34,500 KPa) or some other value appropriate for the application for which the pump will be used. A preferred value is between 200 and 500 psig. (1380-3450 KPa). The time in which the minimal pressure may be determined corresponds to a predetermined stroke position which normal operation will give a value equal or above the minimal acceptable value.

The pressure measuring device 45 determines at least one first threshold pressure at a first time and at least one second pressure at a second time. The first and second time are chosen for a period of time in which the normal pressure decay rate is approximately linear. That is, pressure decay in a normal pump typically is exponential, with the greatest loss of pressure soon after the maximum pressure is attained and falling more steadily thereafter.

The pressure measuring device 45 sends a first threshold pressure signal and sends a second threshold pressure signal to the control means 51. The control means 51 calculates the slope of a line representing the difference of the first pressure signal and the second pressure signal over time and compares the slope with a threshold decay value. The threshold decay value represents a defect in the pump apparatus 11, most likely attributable to a leak. The threshold decay value is preferably determined empirically based upon values and times known to be a characteristic of pump apparatus 11 with acceptable performance. For a parallel pump, used in preparative chromatography applications, a threshold decay value of 100 to 400 psig (690-2760 KPa) per minute is preferred. The time between the first and second pressure signal is, preferably, between 0.05 to 3.0 minutes and most preferably, 0.2 to 1.0 minute. In a parallel pump, the period after the maximum pressure is attained and the first threshold pressure is taken is approximately 0.5 to 1.5 minute.

The control means 51 sends one or more error messages to display 53 to the operator in response to the slope exceeding the threshold decay value. In the alternative or in addition, the control means 51 may turn the apparatus off or place it on stand by status until the control means 51 is reset or repairs made on the apparatus 11.

Preferably, the apparatus 11 has a start up mode in which the control means 51 is turned on and the control means 51 engages the test mode to test for leaks. Software controls to effect the comparisons between test values and predetermined values, to provide error messages and/or stop equipment functions are designed to be consistent with the control circuitry and underlying software of the equipment. These software controls, as described herein, are within the skill of competent software engineers.

The apparatus 11, in test mode, preferably performs a dynamic evaluation of the leak. Control means 51 directs motor 35 to pump fluid at constant pressure. In the event motor 35 is a stepper motor or the piston 21 is equipped with a position sensor [not shown], the steps or position are tracked over time and the volume of the leak is determined by the control means 51.

In operation, the operator starts the apparatus by activating an "on" switch or booting the control means 51. At start up, the control means 51 initiates a test mode. The control means 51 sends a pumping signal to the motor 35, sends a close signal to the switchable valve 41 to cause the fluid in the chamber to be placed under a pressure. The pressure measuring device 45 determines a minimal pressure at a first time and sends a minimal pressure signal to the control means 51. Preferably, the control means 51 compares the minimal pressure with a minimal acceptable value. The minimal acceptable value represents a value which is related to acceptable pump performance. Failure to attain such minimal acceptable value suggests a defect in the pump or solution failure.

The pressure measuring device 45 determines at least one first threshold pressure at a first time and a second threshold pressure at a second time. The pressure measuring device sends a first threshold pressure signal and a second threshold pressure signal to the control means 51. The control means 51 calculates the slope of a line representing the difference of the first threshold pressure signal and the second threshold pressure signal over time and compares the slope with a threshold decay value, representing a defect in the apparatus 11 most likely associated with a leak. The control means 51 sends one or more error messages to the operator in response to the slope exceeding the threshold decay value. The defect or leak may further be characterized by control means which directs the motor 35 in a manner of constant pressure by monitoring the pressure via a feed back from the pressure measuring device 45.

Embodiments of the apparatus, as covered by the present invention, have more than one pumping chamber. One of the apparatus further comprises two pump chambers, a first pump chamber and a second pump chamber in series. Such a series pump apparatus is generally depicted in Figure 2, by reference number 111. Serial apparatus 111 has a first pump chamber 115a having an inlet 117a and outlet 119a. First pump chamber 115a receives fluid from a fluid supply 123 via conduits 125a and 125b through an inlet check valve 137. Serial pump 111 has a second pump chamber 115b having an inlet 117b and outlet 119b. First pump chamber 115a is in fluid communication with the second pump chamber 115b via conduits 171a, 171b and 171c. Check valve 173 is in fluid communication with the first pump chamber 115a and the second pump chamber 115b.

The second pump chamber 115b discharges fluid to the switchable valve 141 via conduits 133a and 133b. Conduits 133c, 133d and 133e connect switchable valve 141 to chromatography column 127, detector 129 and waste receptacle 131.

A first pressure measuring device 139a is in fluid communication with first pump chamber 115a interposed between such chamber and check valve 173. A second pressure measuring device 139b is in fluid communication with the second pump chamber 115b interposed between such chamber and the switchable valve 141.

The apparatus 111 has two motors, a first motor 135a mechanically linked to the first pump chamber 115a and a second motor 135b mechanically linked to the second pump chamber 115b.

The apparatus 111 further comprises control means 151 for receiving the pressure signals via lines 161a and 161b, for sending a close signal to the switchable valve 141 via line 163 and for sending a pumping signal to the motors 135a and 135b via lines 165a and 165b. The control means 151 is preferably a computer equipped with a monitor or display 153. And, in the test mode, the control means 151 sends a signal to the first motor 135a and second motor 135b.

In the test mode, the control means 151 sends a pumping signal to the second motor 135b, sends a close signal to the switchable valve 141 to cause the fluid in the second pump chamber 115b to be placed under a pressure. The second pressure measuring device 139b determines a minimal pressure and sends a minimal pressure signal to the control means. Preferably, the control means 151 compares the minimal pressure with a minimal acceptable value. The minimal acceptable value represents a value which is related to acceptable pump performance. Failure to attain such minimal acceptable value suggests a defect in the pump 111 or solution failure.

Preferably, the second pressure measuring device 139b determines at least one first threshold pressure at a first time and at least one second threshold pressure at a second time. The second pressure measuring device 139b sends a first threshold pressure signal and a second threshold pressure signal to the control means 151. The control means 151 calculates the slope of a line representing the difference of the first threshold pressure signal and the second threshold pressure signal over time and compares the slope with a threshold decay value, where the threshold decay value represents a defect, most likely associated with a leak, in the pump 111. The control means 151 sends one or more error messages to the operator in response to the slope exceeding the threshold decay value or failure to attain the mininmal acceptable value indicating one or more defects in the pump 111, such as, leaks in the check valve 171b or the pump apparatus 111 in fluid communication with the second pump chamber 115b under pressure.

In the alternative or in addition, in the test mode, the control means 151 sends a pumping signal to the first motor 135a, sends a close signal to the switchable valve 141 to cause the fluid in the first pump chamber 115a to be placed under a pressure. The first pressure measuring device 139a determines a minimal pressure and sends a first minimal pressure signal to the control means 151. Preferably, the control means 151 compares the minimal pressure with a minimal acceptable value. The minimal acceptable value represents a value which is related to acceptable pump performance. Failure to attain such minimal acceptable value suggests a defect in the pump or solution failure.

The first pressure measuring device 139a determines at least one second pressure at a second time and sends a second pressure signal to the control means 151. The control means 151 calculates the slope of a line representing the difference of the first pressure signal and the second pressure signal over time and compares the slope with a threshold decay value. The threshold decay value represents a defect, most likely associated with a leak in the pump 111. The control means 151 sends one or more error messages to the operator in response to the slope exceeding the threshold decay value indicating one or more defects in the pump 111, such as, leaks in the inlet valve 127 or the pump apparatus 111 in fluid communication with the first pump chamber 115a under pressure.

Preferably, the control means 151 receives a first set of pressure values from the first pressure measuring device 139a and a second set of pressure values form the second pressure measuring device 139b and compares the values to determine errors in the performance of the pressure measuring devices or leaks in the apparatus 111.

In operation, in the test mode, the control means 151 sends a pumping signal to the second motor 135b, sends a close signal to the switchable valve 141 to cause the fluid in the second chamber 115b to be placed under a pressure. The second pressure measuring device 139b determines a minimal pressure and sends a first pressure signal to the control means 151. Preferably, the control means 151 compares the minimal pressure with a minimal acceptable value. The minimal acceptable value represents a value which is related to acceptable pump performance. Failure to attain such minimal acceptable value suggests a defect in the pump.

Preferably, the second pressure measuring device 139b determines at least one first threshold pressure at a first time and at least one second threshold pressure at a second time. The first pressure measuring device 139b sends a first threshold pressure signal and a second threshold pressure signal to the control means 151. The control means 151 calculates the slope of a line representing the difference of the first pressure signal and the second pressure signal over time and compares the slope with a threshold decay value, representing a defect, most likely associated with a leak in the pump 111. The control means 151 sends one or more error messages to the operator in response to the slope exceeding the threshold value or indicating one or more leaks in the check valve 171b or the pump apparatus 111 in fluid communication with the second pump chamber 115b under pressure.

Preferably, in the test mode, the control means 151 sends a pumping signal to the first motor 135a, and sends a close signal to the switchable valve 141 to cause the fluid in the first chamber 115a to be placed under a pressure. The first pressure measuring device 139a determines a minimal pressure and sends a minimal pressure signal to the control means 151. Preferably, the control means 151 compares the first pressure with a minimal acceptable value. The minimal acceptable value represents a value which is related to acceptable pump performance. Failure to attain such minimal acceptable value suggests a defect in the pump or solution failure.

Preferably, the first pressure measuring device 139a determines at least one first threshold pressure at a first time and at least one second threshold pressure at a second time. The first pressure measuring device 139a sends a first threshold pressure signal and a second threshold pressure signal to the control means 151. The control means 151 calculates the slope of a line representing the difference of the first pressure signal and the second pressure signal over time and compares the slope with a threshold decay value, representing a defect, most likely associated with a leak in the pump. The control means 151 sends one or more error messages to the operator in response to the slope exceeding the threshold value or a failure to attain the minimal acceptable value, indicating one or more defect in the pump 111, such as, leaks in the inlet valve 127 or the pump apparatus 111 in fluid communication with the first pump chamber 115a under pressure.

Preferably, the control means 151 receives a first set of pressure values from the first pressure measuring device 139a and a second set of pressure values form the second pressure measuring device 139b and compares the values to determine errors in the performance of the pressure measuring devices 139a and 139b or leaks in the apparatus 111.

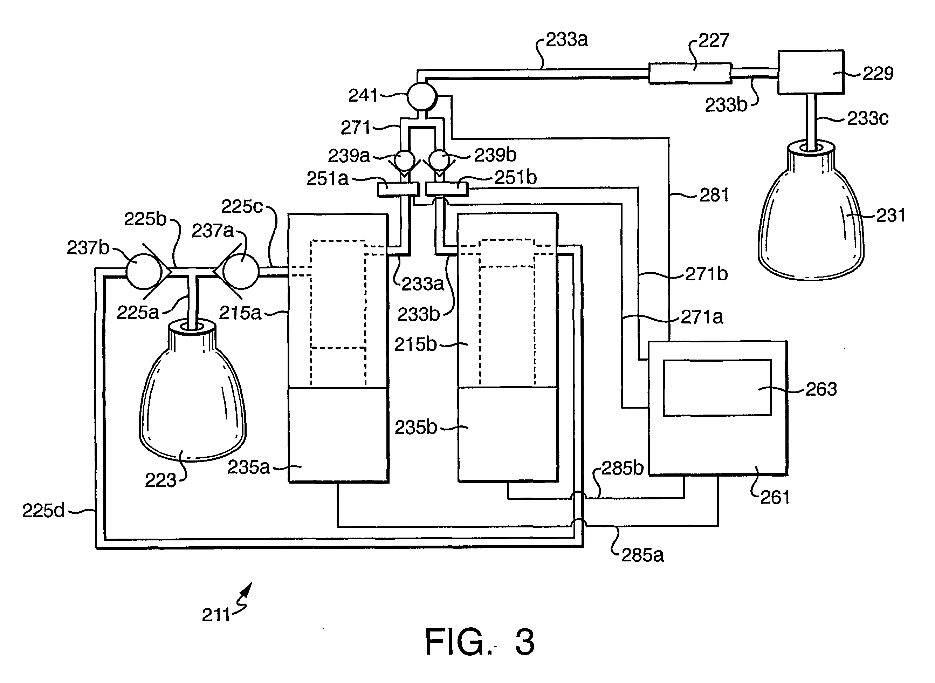

Embodiments not covered by the present invention are useful in pumps in a parallel configuration. Figure 3 depicts a pumping apparatus, generally designated by the numeral 211, of the parallel type. The pumping apparatus 211 has two pump chambers in parallel, a first pump chamber 215a and a second pump chamber 215b. The first pump chamber 215a receives fluid from a fluid supply 223 via a first inlet valve 237a and conduits 225a, 225b and 225c. The second pump chamber 215b receives fluid from fluid supply 223 via a second inlet valve 237b via conduits 225a, 225b and 225d. The first pumping chamber 215a discharges fluid via a first outlet check valve 239a and via conduit 233a. The second pumping chamber 215b discharges fluid via a second outlet check valve 239b via conduit 233b. The first outlet check valve 239a and the second outlet check valve 239b are in fluid communication with the switchable valve 241 via conduits 271 which form a "T". From the switchable valve, fluid flows to a chromatographic column 227,detector 229 and a waste receptacle 231 through conduits 233a, 233b and 233c.

As depicted, the apparatus 211 further comprises two pressure measuring devices 251a and 251b and two motors 235a and 235b. The motors comprise a first motor 235a mechanically linked to the first pump chamber 215a and a second motor 235b mechanically linked to the second pump chamber 215b. The two pressure measuring devices comprise a first pressure measuring device 251a and a second pressure measuring device 251b. The first pressure measuring device 251a is interposed in fluid communication between the first pumping chamber 215a and the first check valve 239a. The second pressure measuring device 251b is interposed in fluid communication between the second pumping chamber 215b and the second check valve 239b. The two pressure measuring devices 251a and 251b allow the first pump chamber 215a and the second pump chamber 215b to be placed in test mode independent of each other.

The apparatus 211 further comprises control means 261 for receiving the pressure signals via lines 271a and 271b, for sending a close signal to the switchable valve 241 via line 281 and for sending a pumping signal to the motors 235a and 235b via lines 285a and 285b. The control means 261 is preferably a computer equipped with a monitor or display 263.

In the test mode, the control means 261 directs one of the motors 235a or 235b to go into pumping mode which places one of the first or second pump chamber 215a or 215b under pressure and such apparatus in fluid communication with the pump chamber under pressure through to the opposite check valve 239a or 239b. In this manner, the outlet check valve of the opposite pump chamber can be tested in a parallel pump. And, of course, in the test mode, first one motor of one pump chamber is placed in pump mode and then the opposite motor of the opposite pump chamber is placed in pump mode to allow testing of both outlet check valves 239a or 239b.

Preferably, the control means receives a first set of pressure values from the first pressure measuring device 251a and a second set of pressure values from the second pressure measuring device 251b and compares the values. Differences in the values suggest errors in the performance of the pressure measuring devices, the first or second pump chambers 215a or 215b, the first and second inlet valves 237a or 237b or the outlet check valves 239a or 239b. These values can also be compared to predetermined minimal acceptable values. Where the test values comprise a first pressure and a second pressure reading separated by time, the test values are compared to threshold decay values as described previously.

In operation, in the test mode, the control means 261 directs one of the motors 235a or 235b to go into pumping mode which places one of the first or second pump chamber 215a or 215b under pressure and such apparatus in fluid communication with the pump chamber under pressure through the opposite check valve 239a or 239b. The test mode allows testing of the outlet check valve of the opposite pump chamber. And, in the test mode first one motor of one pump chamber is placed in pump mode and then the opposite motor of the opposite pump chamber is placed in pump mode to allow testing of both outlet check valves.

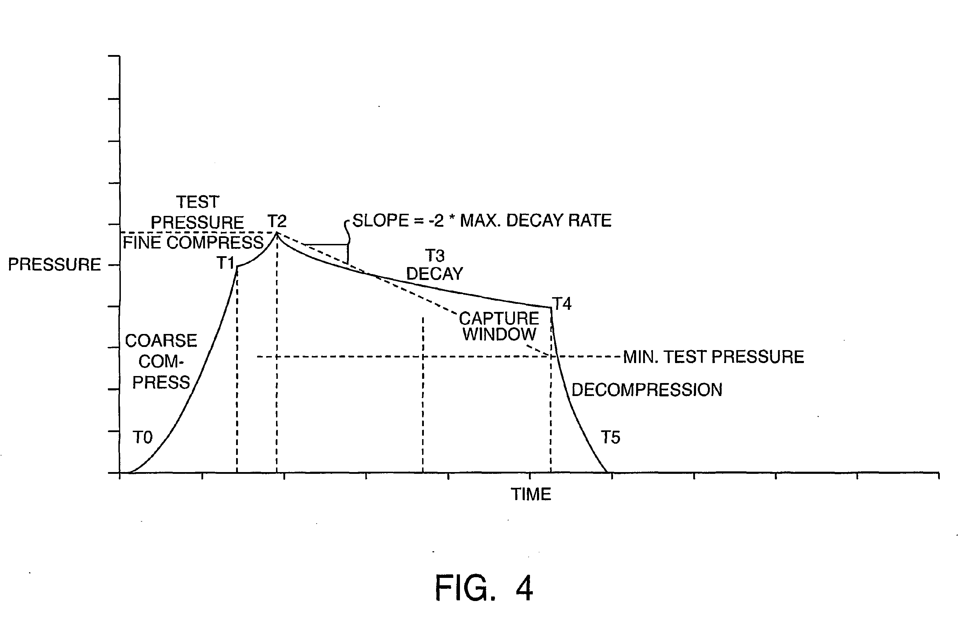

Turning now to Figure 4, such figure depicts the functional behavior of a test mode of one half of the hydraulic circuit of a parallel pump, measuring pressure over time. During the period T₀ to T₁ the control means 261 switches switchable valve 141 to close, directs one of the motors 235a or 235b to go into pumping mode which places one of the first or second pump chamber 215a or 215b under pressure and such apparatus in fluid communication with the pump chamber under pressure through to the opposite check valve 239a or 239b.

The period T₀ to T₁ is a period of course compression. The purpose of the course compression is to quickly bring the hydraulic circuit to approximately the pressure at which the pump will operate or the minimal acceptable pressure. Following the period of course compression, the control means 261 directs the motor to go into a pumping mode that is more tightly controlled. This period between T₁ and T₂, a period of fine compression is intended to bring the system to at least a minimal acceptable pressure. A pressure value from the first pressure measuring device 25 1 a or from the second pressure measuring device 251b is obtained at or about T₂. Control means 261 compares the value to a minimal acceptable value. Failure to attain this value during the period T₁ and T₂ suggests a defect in the pump 111.

During the period T₂ to T₄ the control means 261 directs the motors 235 a or 235b to remain static. Typically, this period is approximately 0.1 to 5 minutes, and, most preferably, 0.2 to 1.0 minutes. At T₃ a further threshold pressure value is obtained from the first pressure measuring device 251a or from the second pressure measuring device 251b. And, at T₄ a further threshold pressure value is obtained. Control means 261 calculates the slope of a line between the pressure values taken at T₃ and T₄. If the pressure values are taken continuous over such period, the values assume a curve sloping downward, representing a typical decay of pressure over time. In the event a leak was present, the curve would assume a more distinct downward slope. The value at T₃ and T₄ would be substantially lower than depicted. The slope of the calculated line is compared to the threshold decay value represented by the dotted line extending between T₂ and T₄. This slope is illustrated for discussion purposes with the actual value being determined empirically. If the slope of the calculated line greater than the threshold value, control means 261 sends an error message.

Having completed the test, if acceptable values are achieved the pump 111 can assume normal pumping operation. To enter pumping mode, during the period T₃ to T₄, the control means 261 depressurizes the hydraulic circuit by backing off the pistons or by switching the switchable valve 141 to open.

The profile depicted in Figure 4 corresponds to a pump having a pump chamber with a 1200 microliter capacity. As depicted in Figure 4, the pressure attained during the course compression period is 250.0 psig (1725 KPa). The normal flow rate for the pump, if valves were open, which they are not would be 3.0 ml per minute. The period of in which the decay rate slope is calculated is 0.5 minute. The decay rate limit is 300 psig (2070 KPa) per minute.

Thus, features of the present invention have been described with the understanding that the description is an exemplification of the invention and the invention should not be so limited. The invention is described more fully in the claims which follow.

## Claims

1. A pumping apparatus (111) for pumping fluid comprising:
at least two pumping chambers comprising a first pumping chamber (115a) and a second pumping chamber (115b), said first pumping chamber and second pumping chamber in series, with said first pumping chamber receiving fluid from a fluid supply (123) and in fluid communication with said second chamber to discharge said fluid to said second chamber, and at least one check valve (173) interposed in fluid communication with said first pumping chamber and said second pumping chamber, each pumping chamber having an inlet (117a, 117b) and an outlet (119a, 119b), and having a piston for movement in said chamber which piston propels said fluid from said chamber, said inlet for receiving fluid into said chamber and said outlet for discharging said fluid from said chamber;
at least one motor (135a, 135b) for powering said pistons in said pumping chambers, said motor operating in pumping mode upon receiving a pumping signal;
at least one inlet valve (137) in fluid communication with said inlet of said first pumping chamber, said inlet valve having an open position and a closed position;
at least one switchable valve (141) in fluid communication with said outlet of said second pumping chamber, said at least one switchable valve having a closed position and an open position, and said at least one switchable valve assuming said closed position upon receiving a close signal;
at least one first pressure measuring device (139a) in fluid communication with said pumping chambers, between said inlet valve and switchable valve, said at least one pressure measuring device producing a pressure signal in response to pressure;
control means (151) for receiving said pressure signal, for sending a close signal to said at least one switchable valve and for sending a pumping signal to said motor, said control means having a test mode in which said control means sends a pumping signal to said motor, sends a close signal to said switchable valve to cause said fluid in said chambers to be placed under a pressure, said first pressure measuring device determining a first threshold pressure at a first time and sending a first threshold pressure signal to said control means, said first pressure measuring device determining at least one second threshold pressure at a second time and sending a second threshold pressure signal to said control means, said control means calculating the slope of a line representing the difference of said first threshold pressure signal and said second threshold pressure signal over time and comparing said slope with a threshold value, said threshold value representing a leak in the pump, said control means sending one or more error messages to the operator in response to said slope exceeding said threshold value.

2. The apparatus of claim 1 further comprising a check valve interposed in fluid communication between said at least two pumping chambers (115a, 115b) and said switchable valve (141).

3. The apparatus of claim 1 wherein said apparatus has a start up mode in which said control means (151) is turned on and said control means engages said test mode upon start up to test for leaks.

4. The apparatus of claim 1 further comprising two motors, a first motor (135a) mechanically linked to said first pumping chamber (115a) and a second motor (135b) mechanically linked to said second pumping chamber (115b), wherein in said test mode said control means (151) sends a signal to said first motor and second motor.

5. The apparatus of claim 4 wherein in said test mode said control means (151) sends a pumping signal to said second motor (135b), sends a close signal to said switchable valve (141) to cause said fluid in said second chamber (115b) to be placed under a pressure, said first pressure measuring device (139a) determining a first threshold pressure at a first time and sending a first threshold pressure signal to said control means, said first pressure measuring device determining at least one second threshold pressure at a second time and sending a second threshold pressure signal to said control means, said control means calculating the slope of a line representing the difference of said first threshold pressure signal and said second threshold pressure signal over time and comparing said slope with a threshold value, said threshold value representing a leak in the pump, said control means sending one or more error messages to the operator in response to said slope exceeding said threshold value indicating one or more leaks in said check valve (173) or said pump apparatus (111) in fluid communication with the second pumping chamber under pressure.

6. The apparatus of claim 4 wherein in said test mode said control means (151) sends a pumping signal to said first motor (135a), sends a close signal to said switchable valve (141) to cause said fluid in said first chamber (115a) to be placed under a pressure, said first pressure measuring device (139a) determining a first threshold pressure at a first time and sending a first pressure signal to said control means, said first pressure measuring device determining at least one second threshold pressure at a second time and sending a second threshold pressure signal to said control means, said control means calculating the slope of a line representing the difference of said first threshold pressure signal and said second threshold pressure signal over time and comparing said slope with a threshold value, said threshold value representing a leak in the pump, said control means sending one or more error messages to the operator in response to said slope exceeding said threshold value indicating one or more leaks in said inlet valve (137) or said pump apparatus (111) in fluid communication with the first pumping chamber under pressure.

7. The apparatus of claim 1 further comprising a second pressure measuring device (139b) interposed in fluid communication between said first pumping chamber (115a) and said check valve (173), wherein in said test mode said control means (151) sends a pumping signal to said first motor (135a), to cause said fluid in said first chamber to be placed under a pressure, said second pressure measuring device determining a first threshold pressure at a first time and sending a first threshold pressure signal to said control means, said second pressure measuring device determining at least one second threshold pressure at a second time and sending a second threshold pressure signal to said control means, said control means calculating the slope of a line representing the difference of said first pressure signal and said second pressure signal over time and comparing said slope with a threshold value, said threshold value representing a leak in the pump, said control means sending one or more error messages to the operator in response to said slope exceeding said threshold value indicating one or more leaks in said inlet valve (137) or check valve (173) or said pump apparatus (111) in fluid communication with the first pumping chamber under pressure.

8. The apparatus of claim 7 wherein said control means (151) sends a close signal to said switchable valve (141), and said control means receives a first set of pressure values from said first pressure measuring device (139a) and a second set of pressure values from said second pressure measuring device (139b) and compares said values to determine errors in the performance of said pressure measuring devices or leaks in the apparatus (111).

9. A method of testing the performance of a pumping apparatus (111) for pumping fluid comprising:
at least two pumping chambers comprising a first pumping chamber (115a) and a second pumping chamber (115b), said first pumping chamber and second pumping chamber in series, with said first pumping chamber receiving fluid from a fluid supply (123) and in fluid communication with said second chamber to discharge said fluid to said second chamber, and at least one check valve (173) interposed in fluid communication with said first pumping chamber and said second pumping chamber, each pumping chamber having an inlet (117a, 117b) and an outlet (119a, 119b), and having a piston for movement in said chamber which piston propels said fluid from said chamber, said inlet for receiving fluid into said chamber and said outlet for discharging said fluid from said chamber;
at least one motor (135a, 135b) for powering said pistons in said pumping chambers, said motor operating in pumping mode upon receiving a pumping signal;
at least one inlet valve (137) in fluid communication with said inlet of said first pumping chamber, said inlet valve having an open position and a closed position;
at least one switchable valve (141) in fluid communication with said outlet of said second pumping chamber, said at least one switchable valve having a closed position and an open position, and said at least one switchable valve assuming said closed position upon receiving a close signal;
at least one first pressure measuring device (139a) in fluid communication with said pumping chambers, between said inlet valve and switchable valve, said at least one pressure measuring device producing a pressure signal in response to pressure;
control means (151) for receiving said pressure signal, for sending a close signal to said at least one switchable valve and for sending a pumping signal to said motor, said control means having a test mode in which said control means send a pumping signal to said motor, sends a close signal to said switchable valve to cause said fluid in said chamber to be placed under a pressure, said first pressure measuring device determining a first threshold pressure at a first time and sending a first threshold pressure signal to said control means, said first pressure measuring device determining at least one second threshold pressure at a second time and sending a second threshold pressure signal to said control means, said control means calculating the slope of a line representing the difference of said first pressure signal and said second pressure signal over time and comparing said slope with a threshold value, said threshold value representing a leak in the pump, said control means sending one or more error messages to the operator in response to said slope exceeding said threshold value; said method comprising the steps of operating said apparatus in test mode.

10. The method of claim 9 wherein said apparatus further comprises a check valve interposed in fluid communication between said at least two pumping chambers (115a, 115b) and said switchable valve (141).

11. The method of claim 9 wherein said apparatus has a start up mode in which said control means (151) is turned on and said control means engages said test mode upon start up to test for leaks.

12. The method of claim 9 wherein said apparatus further comprising two motors, a first motor (135a) mechanically linked to said first pumping chamber (115a) and a second motor (135b) mechanically linked to said second pumping chamber (115b), wherein in said test mode said control means (151) sends a signal to said first motor and second motor.

13. The method of claim 12 wherein in said test mode said control means (151) sends a pumping signal to said second motor (135b), sends a close signal to said switchable valve (141) to cause said fluid in said second chamber (115b) to be placed under a pressure, said first pressure measuring device (139a) determining a first threshold pressure at a first time and sending a first threshold pressure signal to said control means, said first pressure measuring device determining at least one second threshold pressure at a second time and sending a second threshold pressure signal to said control means, said control means calculating the slope of a line representing the difference of said first threshold pressure signal and said second threshold pressure signal over time and comparing said slope with a threshold value, said threshold value representing a leak in the pump, said control means sending one or more error messages to the operator in response to said slope exceeding said threshold value indicating one or more leaks in said check valve (173) or said pump apparatus (111) in fluid communication with the second pumping chamber under pressure.

14. The method of claim 12 wherein in said test mode said control means (151) sends a pumping signal to said first motor (135a), sends a close signal to said switchable valve (141) to cause said fluid in said first chamber (115a) to be placed under a pressure, said first pressure measuring device (139a) determining a first threshold pressure at a first time and sending a first threshold pressure signal to said control means, said first pressure measuring device determining at least one second threshold pressure at a second time and sending a second pressure signal to said control means, said control means calculating the slope of a line representing the difference of said first threshold pressure signal and said second threshold pressure signal over time and comparing said slope with a threshold value, said threshold value representing a leak in the pump, said control means sending one or more error messages to the operator in response to said slope exceeding said threshold value indicating one or more leaks in said inlet valve (137) or said pump apparatus (111) in fluid communication with the first pumping chamber under pressure.

15. The method of claim 10 wherein said apparatus further comprises a second pressure measuring device (139b) interposed in fluid communication between said first pumping chamber (115a) and said check valve (173), wherein in said test mode said control means (151) sends a pumping signal to said first motor (135a), to cause said fluid in said first chamber to be placed under a pressure, said second pressure measuring device determining a first threshold pressure at a first time and sending a first threshold pressure signal to said control means, said second pressure measuring device determining at least one second threshold pressure at a second time and sending a second threshold pressure signal to said control means, said control means calculating the slope of a line representing the difference of said first threshold pressure signal and said second threshold pressure signal over time and comparing said slope with a threshold value, said threshold value representing a leak in the pump, said control means sending one or more error messages to the operator in response to said slope exceeding said threshold value indicating one or more leaks in said inlet valve (137) or check valve (173) or said pump apparatus (111) in fluid communication with the first pumping chamber under pressure.

16. The method of claim 15 wherein said control means (151) sends a close signal to said switchable valve (141), and said control means receives a first set of pressure values from said first pressure measuring device (139a) and a second set of pressure values from said second pressure measuring device (139b) and compares said values to determine errors in the performance of said pressure measuring devices or leaks in the apparatus (111).

## Patentansprüche

1. Pumpvorrichtung (111) für das Pumpen von Fluid, umfassend:
wenigstens zwei Pumpkammern, die eine erste Pumpkammer (115a) und eine zweite Pumpkammer (115b) umfassen, wobei die erste Pumpkammer und die zweite Pumpkammer in Reihe angeordnet sind, wobei die erste Pumpkammer Fluid von einer Fluidzufuhr (123) aufnimmt und in fluider Kommunikation mit der zweiten Kammer steht, um das Fluid an die zweite Kammer abzugeben, sowie wenigstens ein Rückschlagventil (173), das in fluider Kommunikation zwischen der ersten Pumpkammer und der zweiten Pumpkammer angeordnet ist, wobei jede Pumpkammer einen Einlass (117a, 117b) und einen Auslass (119a, 119b) aufweist, sowie einen Kolben für die Bewegung in der Kammer, wobei der Kolben das Fluid aus der Kammer befördert, wobei der Einlass für die Aufnahme von Fluid in die Kammer und der Auslass für die Abgabe des Fluids aus der Kammer ausgestaltet ist;
wenigstens einen Motor (135a, 135b) zum Antreiben der Kolben in den Pumpkammern, wobei der Motor in einem Pumpmodus betrieben wird, sobald ein Pumpsignal empfangen wird;
wenigstens ein Einlassventil (137) in fluider Kommunikation mit dem Einlass der ersten Pumpkammer, wobei das Einlassventil eine offene Position und eine geschlossene Position aufweist;
wenigstens ein Schaltventil (141) in fluider Kommunikation mit dem Auslass der zweiten Pumpkammer, wobei das wenigstens eine Schaltventil eine geschlossene Position und eine offene Position aufweist, und wobei das wenigstens eine Schaltventil beim Empfang eines Schließsignals die geschlossene Position einnimmt;
wenigstens eine erste Druckmessvorrichtung (139a) in fluider Kommunikation mit den Pumpkammern zwischen dem Einlassventil und dem Schaltventil, wobei die wenigstens eine Druckmessvorrichtung ein Drucksignal in Reaktion auf Druck erzeugt;
Steuermittel (151) für den Empfang des Drucksignals, zum Senden eines Schließsignals an das wenigstens eine Schaltventil und zum Senden eines Pumpsignals an den Motor, wobei die Steuermittel einen Testmodus auf weisen, in dem die Steuermittel ein Pumpsignal an den Motor senden, ein Schließsignal an das Schaltventil senden, um zu bewirken, dass das Fluid in den Kammern unter Druck gesetzt wird, wobei die erste Druckmessvorrichtung einen ersten Schwellenwertdruck zu einem ersten Zeitpunkt bestimmt und ein erstes Schwellenwertdrucksignal an die Steuermittel sendet, wobei die erste Druckmessvorrichtung wenigstens einen zweiten Schwellenwertdruck zu einem zweiten Zeitpunkt bestimmt und ein zweites Schwellenwertdrucksignal an die Steuermittel sendet, wobei die Steuermittel die Steigung einer Linie berechnen, die die Differenz des ersten Schwellenwertdrucksignals und des zweiten Schwellenwertdrucksignals als Funktion der Zeit repräsentiert, und die Steigung mit einem Schwellenwert vergleichen, wobei der Schwellenwert ein Leck in der Pumpe repräsentiert, wobei die Steuermittel eine oder mehrere Fehlermeldungen an den Benutzer in Reaktion darauf senden, dass die Steigung den Schwellenwert übersteigt.

2. Vorrichtung nach Anspruch 1, wobei die Vorrichtung ferner ein Rückschlagventil umfasst, das in fluider Kommunikation zwischen den wenigstens zwei Pumpkammern (115a, 115b) und dem Schaltventil (141) angeordnet ist.

3. Vorrichtung nach Anspruch 1, wobei die Vorrichtung einen Hochfahrmodus aufweist, in dem die Steuermittel (151) eingeschaltet werden und die Steuermittel beim Hochfahren den Testmodus benutzen, um nach Lecken zu suchen.

4. Vorrichtung nach Anspruch 1, wobei die Vorrichtung ferner zwei Motoren umfasst, wobei ein erster Motor (135a) mechanisch mit der ersten Pumpkammer (115a) verbunden ist und ein zweiter Motor (135b) mechanisch mit der zweiten Pumpkammer (115b) verbunden ist, wobei in dem Testmodus die Steuermittel (151) ein Signal an den ersten Motor und den zweiten Motor senden.

5. Vorrichtung nach Anspruch 4, wobei in dem Testmodus die Steuermittel (151) ein Pumpsignal an den zweiten Motor (135b) senden, ein Schließsignal an das Schaltventil (141) senden, um zu bewirken, dass das Fluid in der zweiten Kammer (115b) unter Druck gesetzt wird, wobei die erste Druckmessvorrichtung (139a) einen ersten Schwellenwertdruck zu einem ersten Zeitpunkt bestimmt und ein erstes Schwellenwertdrucksignal an die Steuermittel sendet, wobei die erste Druckmessvorrichtung wenigstens einen zweiten Schwellenwertdruck zu einem zweiten Zeitpunkt bestimmt und ein zweites Schwellenwertdrucksignal an die Steuermittel sendet, wobei die Steuermittel die Steigung einer Linie berechnen, die die Differenz des ersten Schwellenwertdrucksignals und des zweiten Schwellenwertdrucksignals als Funktion der Zeit repräsentiert, und die Steigung mit einem Schwellenwert vergleichen, wobei der Schwellenwert ein Leck in der Pumpe repräsentiert, wobei die Steuermittel eine oder mehrere Fehlermeldungen an den Benutzer in Reaktion darauf senden, dass die Steigung den Schwellenwert übersteigt, was auf ein oder mehrere Lecks in dem Rückschlagventil (173) oder der Pumpvorrichtung (111) in fluider Kommunikation mit der zweiten Pumpkammer unter Druck hinweist.

6. Vorrichtung nach Anspruch 4, wobei in dem Testmodus die Steuermittel (151) ein Pumpsignal an den ersten Motor (135a) senden, ein Schließsignal an das Schaltventil (141) senden, um zu bewirken, dass das Fluid in der ersten Kammer (115a) unter Druck gesetzt wird, wobei die erste Druckmessvorrichtung (139a) einen ersten Schwellenwertdruck zu einem ersten Zeitpunkt bestimmt und ein erstes Drucksignal an die Steuermittel sendet, wobei die erste Druckmessvorrichtung wenigstens einen zweiten Schwellenwertdruck zu einem zweiten Zeitpunkt bestimmt und ein zweites Schwellenwertdrucksignal an die Steuermittel sendet, wobei die Steuermittel die Steigung einer Linie berechnen, die die Differenz des ersten Schwellenwertdrucksignals und des zweiten Schwellenwertdrucksignals als Funktion der Zeit repräsentiert, und die Steigung mit einem Schwellenwert vergleichen, wobei der Schwellenwert ein Leck in der Pumpe repräsentiert, wobei die Steuermittel eine oder mehrere Fehlermeldungen an den Benutzer in Reaktion darauf senden, dass die Steigung den Schwellenwert übersteigt, was auf ein oder mehrere Lecks in dem Einlassventil (137) oder der Pumpvorrichtung (111) in fluider Kommunikation mit der ersten Pumpkammer unter Druck hinweist.

7. Vorrichtung nach Anspruch 1, wobei die Vorrichtung ferner eine zweite Druckmessvorrichtung (139b) umfasst, die in fluider Kommunikation zwischen der ersten Pumpkammer (115a) und dem Rückschlagventil (173) angeordnet ist, wobei in dem Testmodus die Steuermittel (151) ein Pumpsignal an den ersten Motor (135a) senden, um zu bewirken, dass das Fluid in der ersten Kammer unter Druck gesetzt wird, wobei die zweite Druckmessvorrichtung einen ersten Schwellenwertdruck zu einem ersten Zeitpunkt bestimmt und ein erstes Schwellenwertdrucksignal an die Steuermittel sendet, wobei die zweite Druckmessvorrichtung wenigstens einen zweiten Schwellenwertdruck zu einem zweiten Zeitpunkt bestimmt und ein zweites Schwellenwertdrucksignal an die Steuermittel sendet, wobei die Steuermittel die Steigung einer Linie berechnen, die die Differenz des ersten Drucksignals und des zweiten Drucksignals als Funktion der Zeit repräsentiert, und die Steigung mit einem Schwellenwert vergleichen, wobei der Schwellenwert ein Leck in der Pumpe repräsentiert, wobei die Steuermittel eine oder mehrere Fehlermeldungen an den Benutzer in Reaktion darauf senden, dass die Steigung den Schwellenwert übersteigt, was auf ein oder mehrere Lecks in dem Einlassventil (137) oder dem Rückschlagventil (173) oder der Pumpvorrichtung (111) in fluider Kommunikation mit der ersten Pumpkammer unter Druck hinweist.

8. Vorrichtung nach Anspruch 7, wobei die Steuermittel (151) ein Schließsignal an das Schaltventil (141) senden und die Steuermittel einen ersten Satz von Druckwerten von der ersten Druckmessvorrichtung (139a) und einem zweiten Satz von Druckwerten von der zweiten Druckmessvorrichtung (139b) empfangen und die Werte vergleichen, um Fehler beim Betrieb der Druckmessvorrichtungen oder Lecks in der Vorrichtung (111) zu bestimmen.

9. Verfahren zum Testen der Leistung einer Pumpvorrichtung (111) zum Pumpen von Fluid, umfassend:
wenigstens zwei Pumpkammern, die eine erste Pumpkammer (115a) und eine zweite Pumpkammer (115b) umfassen, wobei die erste Pumpkammer und die zweite Pumpkammer in Reihe angeordnet sind, wobei die erste Pumpkammer Fluid von einer Fluidzufuhr (123) aufnimmt und in fluider Kommunikation mit der zweiten Kammer steht, um das Fluid an die zweite Kammer abzugeben, sowie wenigstens ein Rückschlagventil (173), das in fluider Kommunikation zwischen der ersten Pumpkammer und der zweiten Pumpkammer angeordnet ist, wobei jede Pumpkammer einen Einlass (117a, 117b) und einen Auslass (119a, 119b) aufweist, sowie einen Kolben für die Bewegung in der Kammer, wobei der Kolben das Fluid aus der Kammer befördert, wobei der Einlass für die Aufnahme von Fluid in die Kammer und der Auslass für die Abgabe des Fluids aus der Kammer ausgestaltet ist;
wenigstens einen Motor (135a, 135b) zum Antreiben der Kolben in den Pumpkammern, wobei der Motor in einem Pumpmodus betrieben wird, sobald ein Pumpsignal empfangen wird;
wenigstens ein Einlassventil (137) in fluider Kommunikation mit dem Einlass der ersten Pumpkammer, wobei das Einlassventil eine offene Position und eine geschlossene Position aufweist;
wenigstens ein Schaltventil (141) in fluider Kommunikation mit dem Auslass der zweiten Pumpkammer, wobei das wenigstens eine Schaltventil eine geschlossene Position und eine offene Position aufweist, und wobei das wenigstens eine Schaltventil beim Empfang eines Schließsignals die geschlossene Position einnimmt;
wenigstens eine erste Druckmessvorrichtung (139a) in fluider Kommunikation mit den Pumpkammern zwischen dem Einlassventil und dem Schaltventil, wobei die wenigstens eine Druckmessvorrichtung ein Drucksignal in Reaktion auf Druck erzeugt;
Steuermittel (151) für den Empfang des Drucksignals, zum Senden eines Schließsignals an das wenigstens eine Schaltventil und zum Senden eines Pumpsignals an den Motor, wobei die Steuermittel einen Testmodus auf weisen, in dem die Steuermittel ein Pumpsignal an den Motor senden, ein Schließsignal an das Schaltventil senden, um zu bewirken, dass das Fluid in den Kammern unter Druck gesetzt wird, wobei die erste Druckmessvorrichtung einen ersten Schwellenwertdruck zu einem ersten Zeitpunkt bestimmt und ein erstes Schwellenwertdrucksignal an die Steuermittel sendet, wobei die erste Druckmessvorrichtung wenigstens einen zweiten Schwellenwertdruck zu einem zweiten Zeitpunkt bestimmt und ein zweites Schwellenwertdrucksignal an die Steuermittel sendet, wobei die Steuermittel die Steigung einer Linie berechnen, die die Differenz des ersten Schwellenwertdrucksignals und des zweiten Schwellenwertdrucksignals als Funktion der Zeit repräsentiert, und die Steigung mit einem Schwellenwert vergleichen, wobei der Schwellenwert ein Leck in der Pumpe repräsentiert, wobei die Steuermittel eine oder mehrere Fehlermeldungen an den Benutzer in Reaktion darauf senden, dass die Steigung den Schwellenwert übersteigt, wobei das Verfahren die Schritte umfasst, die Vorrichtung im Testmodus zu betreiben.

10. Verfahren nach Anspruch 9, wobei die Vorrichtung ferner ein Rückschlagventil umfasst, das in fluider Kommunikation zwischen den wenigstens zwei Pumpkammern (115a, 115b) und dem Schaltventil (141) angeordnet ist.

11. Verfahren nach Anspruch 9, wobei die Vorrichtung einen Hochfahrmodus aufweist, in dem die Steuermittel (151) eingeschaltet werden und die Steuermittel beim Hochfahren den Testmodus benutzen, um nach Lecken zu suchen.

12. Verfahren nach Anspruch 9, wobei die Vorrichtung ferner zwei Motoren umfasst, wobei ein erster Motor (135a) mechanisch mit der ersten Pumpkammer (115a) verbunden ist und ein zweiter Motor (135b) mechanisch mit der zweiten Pumpkammer (115b) verbunden ist, wobei in dem Testmodus die Steuermittel (151) ein Signal an den ersten Motor und den zweiten Motor senden.

13. Verfahren nach Anspruch 12, wobei in dem Testmodus die Steuermittel (151) ein Pumpsignal an den zweiten Motor (135b) senden, ein Schließsignal an das Schaltventil (141) senden, um zu bewirken, dass das Fluid in der zweiten Kammer (115b) unter Druck gesetzt wird, wobei die erste Druckmessvorrichtung (139a) einen ersten Schwellenwertdruck zu einem ersten Zeitpunkt bestimmt und ein erstes Schwellenwertdrucksignal an die Steuermittel sendet, wobei die erste Druckmessvorrichtung wenigstens einen zweiten Schwellenwertdruck zu einem zweiten Zeitpunkt bestimmt und ein zweites Schwellenwertdrucksignal an die Steuermittel sendet, wobei die Steuermittel die Steigung einer Linie berechnen, die die Differenz des ersten Schwellenwertdrucksignals und des zweiten Schwellenwertdrucksignals als Funktion der Zeit repräsentiert, und die Steigung mit einem Schwellenwert vergleichen, wobei der Schwellenwert ein Leck in der Pumpe repräsentiert, wobei die Steuermittel eine oder mehrere Fehlermeldungen an den Benutzer in Reaktion darauf senden, das die Steigung den Schwellenwert übersteigt, was auf ein oder mehrere Lecks in dem Rückschlagventil (173) oder der Pumpvorrichtung (111) in fluider Kommunikation mit der zweiten Pumpkammer unter Druck hinweist.

14. Verfahren nach Anspruch 12, wobei in dem Testmodus die Steuermittel (151) ein Pumpsignal an den ersten Motor (135a) senden, ein Schließsignal an das Schaltventil (141) senden, um zu bewirken, dass das Fluid in der ersten Kammer (115a) unter Druck gesetzt wird, wobei die erste Druckmessvorrichtung (139a) einen ersten Schwellenwertdruck zu einem ersten Zeitpunkt bestimmt und ein erstes Drucksignal an die Steuermittel sendet, wobei die erste Druckmessvorrichtung wenigstens einen zweiten Schwellenwertdruck zu einem zweiten Zeitpunkt bestimmt und ein zweites Schwellenwertdrucksignal an die Steuermittel sendet, wobei die Steuermittel die Steigung einer Linie berechnen, die die Differenz des ersten Schwellenwertdrucksignals und des zweiten Schwellenwertdrucksignals als Funktion der Zeit repräsentiert, und die Steigung mit einem Schwellenwert vergleichen, wobei der Schwellenwert ein Leck in der Pumpe repräsentiert, wobei die Steuermittel eine oder mehrere Fehlermeldungen an den Benutzer in Reaktion darauf senden, dass die Steigung den Schwellenwert übersteigt, was auf ein oder mehrere Lecks in dem Einlassventil (137) oder der Pumpvorrichtung (111) in fluider Kommunikation mit der ersten Pumpkammer unter Druck hinweist.

15. Verfahren nach Anspruch 10, wobei die Vorrichtung ferner eine zweite Druckmessvorrichtung (139b) umfasst, die in fluider Kommunikation zwischen der ersten Pumpkammer (115a) und dem Rückschlagventil (173) angeordnet ist, wobei in dem Testmodus die Steuermittel (151) ein Pumpsignal an den ersten Motor (135a) senden, um zu bewirken, dass das Fluid in der ersten Kammer unter Druck gesetzt wird, wobei die zweite Druckmessvorrichtung einen ersten Schwellenwertdruck zu einem ersten Zeitpunkt bestimmt und ein erstes Schwellenwertdrucksignal an die Steuermittel sendet, wobei die zweite Druckmessvorrichtung wenigstens einen zweiten Schwellenwertdruck zu einem zweiten Zeitpunkt bestimmt und ein zweites Schwellenwertdrucksignal an die Steuermittel sendet, wobei die Steuermittel die Steigung einer Linie berechnen, die die Differenz des ersten Drucksignals und des zweiten Drucksignals als Funktion der Zeit repräsentiert, und die Steigung mit einem Schwellenwert vergleichen, wobei der Schwellenwert ein Leck in der Pumpe repräsentiert, wobei die Steuermittel eine oder mehrere Fehlermeldungen an den Benutzer in Reaktion darauf senden, dass die Steigung den Schwellenwert übersteigt, was auf ein oder mehrere Lecks in dem Einlassventil (137) oder dem Rückschlagventil (173) oder der Pumpvorrichtung (111) in fluider Kommunikation mit der ersten Pumpkammer unter Druck hinweist.

16. Verfahren nach Anspruch 15, wobei die Steuermittel (151) ein Schheßsignal an das Schaltventil (141) senden und die Steuermittel einen ersten Satz von Druckwerten von der ersten Druckmessvorrichtung (139a) und einem zweiten Satz von Druckwerten von der zweiten Druckmessvorrichtung (139b) empfangen und die Werte vergleichen, um Fehler beim Betrieb der Druckmessvorrichtungen oder Lecks in der Vorrichtung (111) zu bestimmen.

## Revendications

1. Appareil de pompage (111) pour le pompage de fluide, comprenant:
au moins deux chambres de pompage comprenant une première chambre de pompage (115a) et une deuxième chambre de pompage (115b), ladite première chambre de pompage et ladite deuxième chambre de pompage étant en série, tandis que ladite première chambre de pompage reçoit du fluide provenant d'une alimentation en fluide (123) et en communication fluidique avec ladite deuxième chambre pour faire parvenir ledit fluide dans ladite deuxième chambre, et au moins une soupape de retenue (173) interposée en communication fluidique avec ladite première chambre de pompage et ladite deuxième chambre de pompage, chaque chambre de pompage ayant une entrée (117a, 117b) et une sortie (119a, 119b), et ayant un piston pour le mouvement dans ladite chambre, lequel piston propulse ledit fluide hors de ladite chambre, ladite entrée étant pour la réception de fluide dans ladite chambre et ladite sortie pour faire sortir ledit fluide de ladite chambre;
au moins un moteur (135a, 135b) pour faire fonctionner lesdits pistons dans les dites chambres de pompage, ledit moteur opérant en mode pompage lorsqu'il reçoit un signal de pompage;
au moins une soupape d'admission (137) en communication fluidique avec ladite admission de ladite première chambre de pompage, ladite soupape d'admission ayant une position ouverte et une position fermée;
au moins une soupape commutable (141) en communication fluidique avec ladite sortie de ladite deuxième chambre de pompage, ladite au moins une soupape commutable ayant une position fermée et une position ouverte, et ladite au moins une soupape commutable adoptant ladite position fermée lorsqu'elle reçoit un signal de fermeture;
au moins un premier dispositif de mesure de pression (139a) en communication fluidique avec les dites chambres de pompage, entre ladite soupape d'admission et ladite soupape commutable, ledit au moins un dispositif de mesure de pression produisant un signal de pression en réponse à une pression;
des moyens de régulation (151) pour recevoir ledit signal de pression, pour envoyer un signal de fermeture à ladite au moins une soupape commutable et pour envoyer un signal de pompage au dit moteur, lesdits moyens de régulation ayant un mode test dans lequel ledit moyen de régulation envoie un signal de pompage au dit moteur, envoie un signal de fermeture à ladite soupape commutable pour amener ledit fluide dans les dites chambres à être placé sous une pression, ledit premier dispositif de mesure de pression déterminant une première pression de seuil à un premier instant et envoyant un premier signal de pression de seuil au dit moyen de régulation, ledit premier dispositif de mesure de pression déterminant au moins une deuxième pression de seuil à un deuxième instant et envoyant un deuxième signal de pression de seuil au dit moyen de régulation, ledit moyen de régulation calculant la pente d'une courbe représentant la différence entre ledit premier signal de pression de seuil et ledit deuxième signal de pression de seuil au cours du temps et comparant ladite pente avec une valeur de seuil, ladite valeur de seuil représentant une fuite dans la pompe, ledit moyen de régulation envoyant un ou plusieurs messages d'erreur à l'opérateur en réponse à ladite pente dépassant ladite valeur de seuil.

2. Appareil selon la revendication 1, comprenant en outre une soupape de retenue interposée en communication fluidique entre les dites au moins deux chambres de pompage (115a, 115b) et ladite soupape commutable (141).

3. Appareil selon la revendication 1, dans lequel ledit appareil possède un mode de démarrage dans lequel ledit moyen de contrôle (151) est ouvert et ledit moyen de contrôle engage ledit mode de test lors du démarrage pour tester des fuites.

4. Appareil selon la revendication 1, comprenant en outre deux moteurs, un premier moteur (135a) relié mécaniquement à ladite première chambre de pompage (115a) et un deuxième moteur (135b) relié mécaniquement à ladite deuxième chambre de pompage (115b), tandis que dans ledit mode de test ledit moyen de contrôle (151) envoie un signal aux dits premier moteur et deuxième moteur.

5. Appareil selon la revendication 4, dans lequel dans ledit mode de test ledit moyen de contrôle (151) envoie un signal de pompage au dit deuxième moteur (135b), envoie un signal de fermeture à ladite soupape commutable (141) pour amener ledit fluide dans ladite deuxième chambre (115b) à être placé sous une pression, ledit premier dispositif de mesure de pression (139a) déterminant une première pression de seuil à un premier instant et envoyant un premier signal de pression de seuil au dit moyen de contrôle, ledit premier dispositif de mesure de pression déterminant au moins une deuxième pression de seuil à un deuxième instant et envoyant un deuxième signal de pression de seuil au dit moyen de contrôle, ledit moyen de contrôle calculant la pente d'une courbe représentant la différence entre ledit premier signal de pression de seuil et ledit deuxième signal de pression de seuil en fonction du temps et comparant ladite pente avec une valeur de seuil, ladite valeur de seuil représentant une fuite dans la pompe, ledit moyen de contrôle envoyant un ou plusieurs messages d'erreur à l'opérateur en réponse à un dépassement par ladite pente de ladite valeur de seuil, indiquant ainsi une ou plusieurs fuites dans ladite soupape de retenue (173) ou ledit appareil formant pompe (111) en communication fluidique avec la deuxième chambre de pompage sous pression.

6. Appareil selon la revendication 4, dans lequel dans ledit mode de test ledit moyen de contrôle (151) envoie un signal de pompage au dit premier moteur (135a), envoie un signal de fermeture à ladite soupape commutable (141) pour amener ledit fluide dans ladite première chambre (115a) à être placé sous une pression, ledit premier dispositif de mesure de pression (139a) déterminant une première pression de seuil à un premier instant et envoyant un premier signal de pression au dit moyen de contrôle, ledit premier dispositif de mesure de pression déterminant au moins une deuxième pression de seuil à un deuxième instant et envoyant un deuxième signal de pression de seuil au dit moyen de contrôle, ledit moyen de contrôle calculant la pente d'une courbe représentant la différence entre ledit premier signal de pression de seuil et ledit deuxième signal de pression de seuil en fonction du temps et comparant ladite pente avec une valeur de seuil, ladite valeur de seuil représentant une fuite dans la pompe, ledit moyen de contrôle envoyant un ou plusieurs messages d'erreur à l'opérateur en réponse à un dépassement par ladite pente de ladite valeur de seuil, indiquant ainsi une ou plusieurs fuites dans ladite soupape d'admission (137) ou ledit appareil formant pompe (111) en communication fluidique avec la première chambre de pompage sous pression.

7. Appareil selon la revendication 1, comprenant en outre un deuxième dispositif de mesure de pression (139b) interposé en communication fluidique entre ladite première chambre de pompage (115a) et ladite soupape de retenue (173), tandis que dans ledit mode de test ledit moyen de contrôle (151) envoie un signal de pompage au dit premier moteur (135a), pour amener ledit fluide dans ladite première chambre à être placé sous une pression, ledit deuxième dispositif de mesure de pression déterminant une première pression de seuil à un premier instant et envoyant un premier signal de pression de seuil au dit moyen de contrôle, ledit deuxième dispositif de mesure de pression détermine au moins une deuxième pression de seuil à un deuxième instant et envoyant un deuxième signal de pression de seuil au dit moyen de contrôle, ledit moyen de contrôle calculant la pente d'une courbe représentant la différence entre ledit premier signal de pression et ledit deuxième signal de pression en fonction du temps et comparant ladite pente avec une valeur de seuil, ladite valeur de seuil représentant une fuite dans la pompe, ledit moyen de contrôle envoyant un ou plusieurs messages d'erreur à l'opérateur en réponse à un dépassement par ladite pente de ladite valeur de seuil, indiquant ainsi une ou plusieurs fuites dans la soupape d'admission (137) ou la soupape de retenue (173) ou ledit appareil formant pompe (111) en communication fluidique avec la première chambre de pompage sous pression.

8. Appareil selon la revendication 7, dans lequel ledit moyen de contrôle (151) envoie un signal de fermeture à ladite soupape commutable (141), et ledit moyen de contrôle reçoit un premier ensemble de valeurs de pression provenant dudit premier dispositif de mesure de pression (139a) et un deuxième ensemble de valeurs de pression provenant dudit deuxième dispositif de mesure de pression (139b) et compare les dites valeurs pour déterminer des erreurs dans la performance des dits dispositifs de mesure de pression ou des fuites dans l'appareil (111).

9. Procédé pour tester la performance d'un appareil de pompage (111) pour le pompage de fluide, comprenant:
au moins deux chambres de pompage comprenant une première chambre de pompage (115a) et une deuxième chambre de pompage (115b), ladite première chambre de pompage et ladite deuxième chambre de pompage étant en série, tandis que ladite première chambre de pompage reçoit du fluide provenant d'une alimentation en fluide (123) et en communication fluidique avec ladite deuxième chambre de pompage pour faire parvenir ledit fluide dans ladite deuxième chambre, et au moins une soupape de retenue (173) interposée en communication fluidique avec ladite première chambre de pompage et ladite deuxième chambre de pompage, chaque chambre de pompage ayant une entrée (117a, 117b) et une sortie (119a, 119b), et ayant un piston pour le mouvement dans ladite chambre, lequel piston propulse ledit fluide hors de ladite chambre, ladite entrée étant pour la réception de fluide dans ladite chambre et ladite sortie pour faire sortir ledit fluide de ladite chambre;
au moins un moteur (135a, 135b) pour faire fonctionner lesdits pistons dans les dites chambres de pompage, ladite moteur opérant en mode pompage lorsqu'il reçoit un signal de pompage;
au moins une soupape d'admission (137) en communication fluidique avec ladite admission de ladite première chambre de pompage, ladite soupape d'admission ayant une position ouverte et une position fermée;
au moins une soupape commutable (141) en communication fluidique avec ladite sortie de ladite deuxième chambre de pompage, ladite au moins une soupape commutable ayant une position fermée et une position ouverte, et ladite au moins une soupape commutable prenant ladite position fermée lorsqu'elle reçoit un signal de fermeture;
au moins un premier dispositif de mesure de pression (139a) en communication fluidique avec les dites chambres de pompage, entre ladite soupape d'admission et ladite soupape commutable, ledit au moins un dispositif de mesure de pression produisant un signal de pression en réponse à une pression;
des moyens de régulation (151) pour recevoir ledit signal de pression, pour envoyer un signal de fermeture à ladite au moins une soupape commutable et pour envoyer un signal de pompage au dit moteur, lesdits moyens de régulation ayant un mode test dans lequel ledit moyen de régulation envoie un signal de pompage au dit moteur, envoie un signal de fermeture à ladite soupape commutable pour amener ledit fluide dans les dites chambres à être placé sous une pression, ledit premier dispositif de mesure de pression déterminant une première pression de seuil à un premier instant et envoyant un premier signal de pression de seuil au dit moyen de régulation, ledit premier dispositif de mesure de pression déterminant au moins une deuxième pression de seuil à un deuxième instant et envoyant un deuxième signal de pression de seuil au dit moyen de régulation, ledit moyen de régulation calculant la pente d'une courbe représentant la différence entre ledit premier signal de pression de seuil et ledit deuxième signal de pression de seuil au cours du temps et comparant ladite pente avec une valeur de seuil, ladite valeur de seuil représentant une fuite dans la pompe, ledit moyen de régulation envoyant un ou plusieurs messages d'erreur à l'opérateur en réponse à ladite pente dépassant ladite valeur de seuil, tandis que ledit procédé comprend les étapes de mise en fonctionnement du dit appareil en mode de test.

10. Procédé selon la revendication 9, dans lequel ledit appareil comprend en outre une soupape de retenue interposée en communication fluidique entre les dites au moins deux chambres de pompage (115a, 115b) et ladite soupape commutable (141).

11. Procédé selon la revendication 9, dans lequel ledit appareil possède un mode de démarrage dans lequel ledit moyen de contrôle (151) est ouvert et ledit moyen de contrôle engage ledit mode de test lors du démarrage pour tester des fuites.

12. Procédé selon la revendication 9, dans lequel ledit appareil comprend en outre deux moteurs, un premier moteur (135a) relié mécaniquement à ladite première chambre de pompage (115a) et un deuxième moteur (135b) relié mécaniquement à ladite deuxième chambre de pompage (115b), tandis que dans ledit mode de test ledit moyen de contrôle (151) envoie un signal aux dits premier moteur et deuxième moteur.

13. Procédé selon la revendication 12, dans lequel dans ledit mode de test ledit moyen de contrôle (151) envoie un signal de pompage au dit deuxième moteur (135b), envoie un signal de fermeture à ladite soupape commutable (141) pour amener ledit fluide dans ladite deuxième chambre (115b) à être placé sous une pression, ledit premier dispositif de mesure de pression (139a) déterminant une première pression de seuil à un premier instant et envoyant un premier signal de pression de seuil au dit moyen de contrôle, ledit premier dispositif de mesure de pression déterminant au moins une deuxième pression de seuil à un deuxième instant et envoyant un deuxième signal de pression de seuil au dit moyen de contrôle, ledit moyen de contrôle calculant la pente d'une courbe représentant la différence entre ledit premier signal de pression de seuil et ledit deuxième signal de pression de seuil en fonction du temps et comparant ladite pente avec une valeur de seuil, ladite valeur de seuil représentant une fuite dans la pompe, ledit moyen de contrôle envoyant un ou plusieurs messages d'erreur à l'opérateur en réponse à un dépassement par ladite pente de ladite valeur de seuil, indiquant ainsi une ou plusieurs fuites dans ladite soupape de retenue (173) ou ledit appareil formant pompe (111) en communication fluidique avec la deuxième chambre de pompage sous pression.

14. Procédé selon la revendication 12, dans lequel dans ledit mode de test ledit moyen de contrôle (151) envoie un signal de pompage au dit premier moteur (135a), envoie un signal de fermeture à ladite soupape commutable (141) pour amener ledit fluide dans ladite première chambre (115a) à être placé sous une pression, ledit premier dispositif de mesure de pression (139a) déterminant une première pression de seuil à un premier instant et envoyant un premier signal de pression au dit moyen de contrôle, ledit premier dispositif de mesure de pression déterminant au moins une deuxième pression de seuil à un deuxième instant et envoyant un deuxième signal de pression de seuil au dit moyen de contrôle, ledit moyen de contrôle calculant la pente d'une courbe représentant la différence entre ledit premier signal de pression de seuil et ledit deuxième signal de pression de seuil en fonction du temps et comparant ladite pente avec une valeur de seuil, ladite valeur de seuil représentant une fuite dans la pompe, ledit moyen de contrôle envoyant un ou plusieurs messages d'erreur à l'opérateur en réponse à un dépassement par ladite pente de ladite valeur de seuil, indiquant ainsi une ou plusieurs fuites dans ladite soupape d'admission (137) ou ledit appareil formant pompe (111) en communication fluidique avec la première chambre de pompage sous pression.

15. Procédé selon la revendication 10, dans lequel ledit appareil comprend en outre un deuxième dispositif de mesure de pression (139b) interposé en communication fluidique entre ladite première chambre de pompage (115a) et ladite soupape de retenue (173), tandis que dans ledit mode de test ledit moyen de contrôle (151) envoie un signal de pompage au dit premier moteur (135a), pour amener ledit fluide dans ladite première chambre à être placé sous une pression, ledit deuxième dispositif de mesure de pression déterminant une première pression de seuil à un premier instant et envoyant un premier signal de pression de seuil au dit moyen de contrôle, ledit deuxième dispositif de mesure de pression déterminant au moins une deuxième pression de seuil à un deuxième instant et envoyant un deuxième signal de pression de seuil au dit moyen de contrôle, ledit moyen de contrôle calculant la pente d'une courbe représentant la différence entre ledit premier signal de pression et ledit deuxième signal de pression en fonction du temps et comparant ladite pente avec une valeur de seuil, ladite valeur de seuil représentant une fuite dans la pompe, ledit moyen de contrôle envoyant un ou plusieurs messages d'erreur à l'opérateur en réponse à un dépassement par ladite pente de ladite valeur de seuil, indiquant ainsi une ou plusieurs fuites dans la soupape d'admission (137) ou la soupape de retenue (173) ou ledit appareil formant pompe (111) en communication fluidique avec la première chambre de pompage sous pression.

16. Procédé selon la revendication 15, dans lequel ledit moyen de contrôle (151) envoie un signal de fermeture à ladite soupape commutable (141), et ledit moyen de contrôle reçoit un premier ensemble de valeurs de pression provenant dudit premier dispositif de mesure de pression (139a) et un deuxième ensemble de valeurs de pression provenant dudit deuxième dispositif de mesure de pression (139b) et compare les dites valeurs pour déterminer des erreurs dans la performance des dits dispositifs de mesure de pression ou des fuites dans l'appareil (111).
